(19) Europäisches Patentamt

European Patent Office

Office européen des brevets

(11) **EP 1 114 982 B1**

(12) **EUROPEAN PATENT SPECIFICATION**

(45) Date of publication and mention
of the grant of the patent:
**09.10.2002 Bulletin 2002/41**

(51) Int Cl.$^7$: **G01D 5/244**

(21) Application number: **00810011.7**

(22) Date of filing: **06.01.2000**

(54) **Angle transducer system**

Winkelgeber

Capteur d'angles

(84) Designated Contracting States:
**AT BE CH CY DE DK ES FI FR GB GR IE IT LI LU MC NL PT SE**

(43) Date of publication of application:
**11.07.2001 Bulletin 2001/28**

(73) Proprietor: **Contelec AG**
**2503 Biel/Bienne (CH)**

(72) Inventors:
• **Christe, Robert Antoine Maurice**
**2612 Cormoret (CH)**
• **Zingg, Roger**
**2562 Port (CH)**

(74) Representative:
**AMMANN PATENTANWÄLTE AG BERN**
**AMMANN INGENIEURS-CONSEILS EN**
**PROPRIETE INTELLECTUELLE SA BERNE**
**AMMANN PATENT ATTORNEYS LTD BERNE**
**Schwarztorstrasse 31**
**Postfach**
**3001 Bern (CH)**

(56) References cited:
**EP-A- 0 489 936          EP-A- 0 952 429**
**DE-A- 19 548 385**

## Description

The invention concerns an angle transducer system.

Known transducer systems provide an electrical output signal which corresponds to a rotation angle of a rotatable axle of the transducer. In many practical applications much more capabilities are required than those of a simple transducer of the kind just mentioned. For instance a plurality of different output signals should be generated depending from, respectively in function of the value of a rotation angle of a rotatable axle. In the prior art such a need has been satisfied by means of sensors and in some cases by combined use of sensors and other elements, e.g. microswitches. The disadvantage of this prior art approach is that the devices needed are relatively expensive and have a comparatively large size.

DE 195 48 385 A1 describes a system, wherein the rotation angle of an axle is determined using two sine signals, each provided by a direction sensor. EP 0 952 429 A1 discloses a system, wherein the rotation angle of a rotatable disk, which is provided with a code, is measured using optoelectronical reading means.

A main aim of the invention is to provide an angle transducer system which has enhanced capabilities and which is substantially smaller and also less expensive than known prior art systems.

According to the invention this aim is attained with an angle transducer system comprising the elements defined in claim 1. Preferred embodiments of the invention are defined by the dependent claims 2-10.

The main advantages obtained with an angle transducer system according to the invention are its enhanced capabilities, its substantially reduced size and its lower cost.

Other advantages obtainable with an angle transducer system according to the invention can be summarized as follows:

(1) the programmability of its output signal as a freely chosen function f(x) of a signal x which corresponds to a measured rotation angle,
(2) its reduced overall size compared with prior art systems,
(3) the availability of different power supply voltages within the angle transducer system,
(4) its aptitude to be calibrated on-line,
(5) its aptitude to effect a self-diagnosis test and to provide a resulting system status signal
(6) its capability to process external signals,
(7) interchangeable interface extensions integrated in user connector element,
(8) absolute angle measurement of any angle value in a range comprising at least values going from 0 to 360°
(9) angle signal obtained indicates sense of rotation,
(10) various protocols are programmable,
(11) possibility of building a feedback loop,
(12) its aptitude to operate in a master/slave relationship with other angle transducer systems,
(13) its aptitude to be linked to a network (e.g. by means of a bus),
(14) its aptitude to be used as a contactless angle transducer device capable of measuring a rotation angle extending over multiple revolutions of a rotatable axle, which can be a part of the angle transducer system or a separate part (e.g. a crossing shaft or a hollow shaft) of an apparatus connected to this system,
(15) its aptitude to be used without a housing and integrated on a rotatable axle,
(16) its aptitude to be used as accelerometer, and
(17) its aptitude to be used as inclination meter.

A more complete appreciation of the invention and many of the attendant advantages thereof will be readily obtained as the same becomes better understood by reference to the following detailed description when considered in connection with the accompanying drawing(s) wherein:

Fig. 1 is a block diagram of a preferred embodiment of the invention.

Fig. 2 is a block diagram showing an embodiment of the external signal connecting means 19 in Figure 1.

Fig. 3 is a block diagram showing use of the embodiment shown by Fig. 1 for controlling a motor.

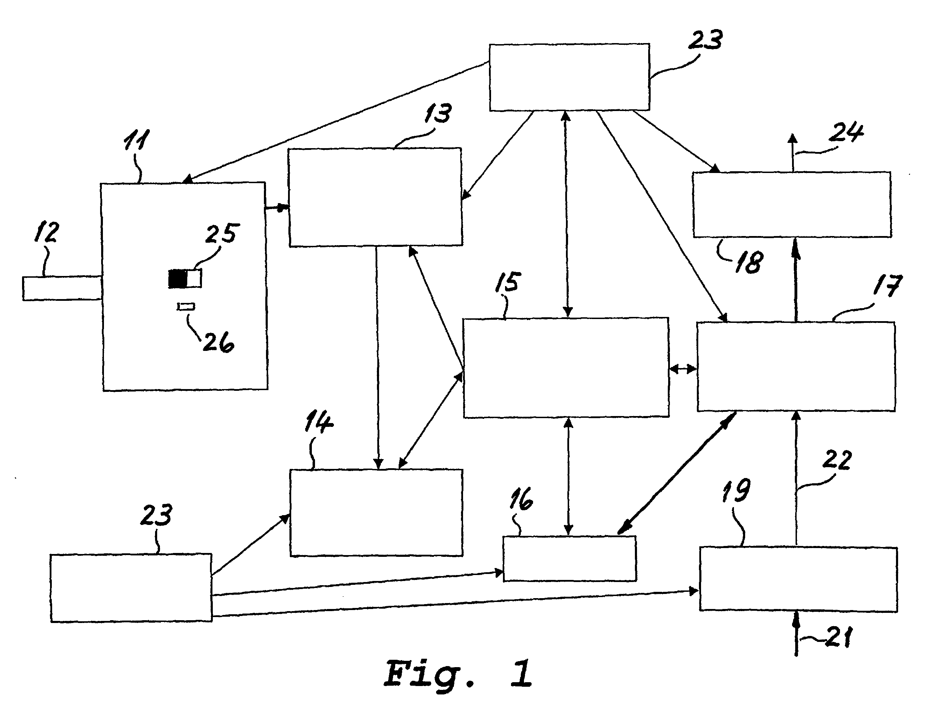

Fig. 1 shows an example of a preferred embodiment of an angle transducer system according to the invention. Such a system comprises angle sensing means 11, electronic amplifier means 13, signal correcting electronic circuit means 14, a first electronic arithmetic unit 15, electronic memory means 16, and a second electronic arithmetic unit 17.

Angle sensing means 11 have output leads and are adapted for providing at their output leads two electrical angle signals which are in quadrature (this means that there is a phase difference of 90° between the angle signals), which are directly related to a rotation angle of a rotatable axle 12, and which together carry information representative of the size and sense of the rotation angle. In this way angle sensing means 11 enable the measurement of a rotation angle having a size in a range comprising at least angle values going from 0 to 360 degrees and having any angle value within that range. This angle measurement is an absolute angle measurement. This means that any angle measured by angle sensing means 11 is directly related to the mechanical angular position of the rotatable axle 12 and that a measured angle value is kept by the angle sensing means 11 even if the electrical power supply is interrupted.

Angle sensing means 11 comprise e.g. a Hall effect type angle sensing device 26, e.g. a Hall integrated circuit, which enables contactless measurement of a rotation angle. In a preferred embodiment this sensing device includes the rotatable axle 12 having at one end a magnet 25 which cooperates with the Hall effect type angle sensing device for measuring a rotation angle of the rotatable axle 12. However in another embodiment of the invention, rotatable axle 12 and the magnet at the end thereof is a separate part which does not belong to the Hall effect type angle sensing device 26, but for instance to a separate apparatus or apparatus part.

In a preferred embodiment Hall effect type angle sensing device 26 is an integrated circuit built on a silicon substrate and having all necessary contacts on the same side of the substrate. This kind of device is called Vertical Hall. By means of this device it is possible to integrate in the sensing device two active axis having a phase difference of exactly 90° and this on the same silicon substrate. Since these axis have the same origin and a high accuracy of their 90° phase difference is achieved by a lithographic manufacturing process, a high accuracy of the angle measurement is obtainable. Moreover, the same manufacturing process ensures that both axis have intrinsically the same characteristics.

Electronic amplifier means 13 have input and output leads. The input leads of electronic amplifier means 13 are each connected to an output lead of angle sensing means 11. Amplifier means 13 amplify angle signals provided at the output leads of angle sensing means 11 and provide at the cutput leads of amplifier means 13 two corresponding amplified angle signals.

Signal correcting electronic circuit means 14 have input and output leads. The input leads of signal correcting circuit means 14 are each connected to an output lead of amplifier means 13. Signal correcting circuit means 14 are adapted for modifying each of the two amplified angle signals with a predetermined correcting value and for providing at their output leads two corresponding corrected amplified angle signals. Signal correcting electronic circuit means 14 serve for correcting errors of the angle signals due to imperfections of the angle sensing means 11, due for instance to an offset voltage of the latter means, and to mechanical tolerances related to the mechanical assembling.

In a preferred embodiment signal correcting circuit means 14 are adapted for multiplying each of the two amplified angle signals with a predetermined correcting factor. In another embodiment, signal correcting circuit means 14 are adapted for adding to each of the two amplified angle signals a predetermined correcting value.

First electronic arithmetic unit 15 has input and output leads. Input leads of these unit 15 are each connected to an output lead of signal correcting circuit means 14. First electronic arithmetic unit 15 is adapted for processing the corrected amplified angle signals according to a predetermined program, e.g. a CORDIC algorithm, in order to provide at a first output lead a first digital signal x which accurately represents the size and sense of the rotation angle of rotation axle 12. In addition a part of first electronic arithmetic unit 15 can be used to build the above mentioned amplifier means 13.

Essentially the signal processing effected with first electronic arithmetic unit 15 extracts the value of a rotation angle ALPHA by means of the relationship

$$ALPHA = arc\ tan\ (sin\ ALPHA\ /\ cos\ ALPHA)$$

wherein sin ALPHA respectively cos ALPHA are represented by the above mentioned corrected amplified angle signals provided to the inputs of first electronic arithmetic unit 15. Since ALPHA is obtained by forming a quotient of signals representative of sin ALPHA and cos ALPHA error deviations of these signals due to effects of temperature on the Hall sensor or to the distance between magnet 25 and Hall sensor 26 will have no effect on the measured value of ALPHA. The effect of temperature or tolerances of the position of magnet 25 with respect to sensor 26 in a vertical direction Z are therefore negligible.

In the above described way Hall sensor 25 measures the components of the magnetic field created by magnet 26 in two orthogonal directions X and Y, which define a plane orthogonal to the above mentioned vertical direction Z. The measured X- and Y-components of the magnetic field correspond to the components of the angle ALPHA which defines the angular position of rotatable axle 12. Therefore, if magnet 26 creates a substantially homogeneous magnetic field around its center of rotation even some eccentricity of magnet 26 will have no effect on the accuracy of the measurement of the angle ALPHA.

Electronic memory means 16 are connected with first electronic arithmetic unit 15 and are adapted for storing at least data to be delivered to the first electronic arithmetic unit 15. In a preferred embodiment electronic memory means 16 are adapted for storing also data provided by first electronic arithmetic unit 15. In another preferred embodiment electronic memory means 16 are adapted for storing also data provided by and/or to be delivered to second electronic arithmetic unit 17.

Second electronic arithmetic unit 17 has input leads and at least one output lead. At least one of the input leads of unit 17 is connected to the first output lead of first electronic arithmetic unit 15. Second electronic arithmetic unit 17 is adapted for processing the first digital signal provided at the first output lead of first electronic arithmetic unit 15 in order to provide at the at least one output lead of second electronic arithmetic unit 17 a second digital signal which represents a value y taken by a predetermined function f(x) for a value x of the first digital signal. Second electronic arithmetic unit 17 primarily serves for processing the first digital signal x according to a predetermined program in order to provide the second digital signal y. The function f (x) can be any function or combination of functions suitable to satisfy a particular need of a user. Second electronic arithmetic unit 17 also makes possible to implement logic and/or analog switches in parallel with an analog or digital output representative of an absolute angular position of rotatable axle 12. Various protocols, standard ones or client specific, are programmable by means of second electronic arithmetic unit 17. Second electronic arithmetic unit 17 makes possible to implement various forms of analog and digital interfacings with a user or users of an angle transducer system according to the invention.

First electronic arithmetic unit 15 and second electronic arithmetic unit 17 can be each a microprocessor or both can be part of one and the same microprocessor.

A preferred embodiment of an angle transducer system according to the invention further comprises universal interface hardware means 18 which are a link between the output or outputs of second electronic arithmetic unit 17 and a user or users of an angle transducer system according to the invention. Universal interface hardware 18 is adapted for receiving from second electronic arithmetic unit 17 at least one data signal corresponding to the second digital signal, and for providing an output electrical signal, e.g. a current or a voltage, corresponding to the second digital signal. Universal interface hardware 18 comprises e.g. one or more of the following means: RS232, RS422, SSI, SPI, CAN-bus, Profibus, Interbus, etc. These means are preferably interchangeable and some of these means can also be software instead of hardware. Universal interface hardware 18 are preferably integrated in a connector element which enables connection of an angle transducer system according to the invention to a user, e.g. a motor to be controlled.

An angle transducer system according to the invention makes possible to provide at the output of interface means 18 an electrical signal which can be analog, digital or a Pulse Width Modulation signal which represents a value of a rotation angle of rotatable axle 12.

A further preferred embodiment of an angle transducer system according to the invention further comprises external signal connecting means 19 having at least one input lead 21 and at least one output lead 22, the latter lead being connected with at least one input lead of second electronic arithmetic unit 17. An angle transducer system according to the invention including external signal connecting means 19 is thus able to receive and process external signals.

External signal connecting means 19 are adapted for receiving at least one external signal via their at least one input lead 21, and for transmitting to second electronic arithmetic unit 17 via their at least one output lead 22 a signal corresponding to the at least one external signal.

In a preferred embodiment external signal connecting means 19, second electronic arithmetic unit 17 and universal interface hardware 18 are also adapted to transmit the at least one external signal directly to an output lead of universal interface hardware 18.

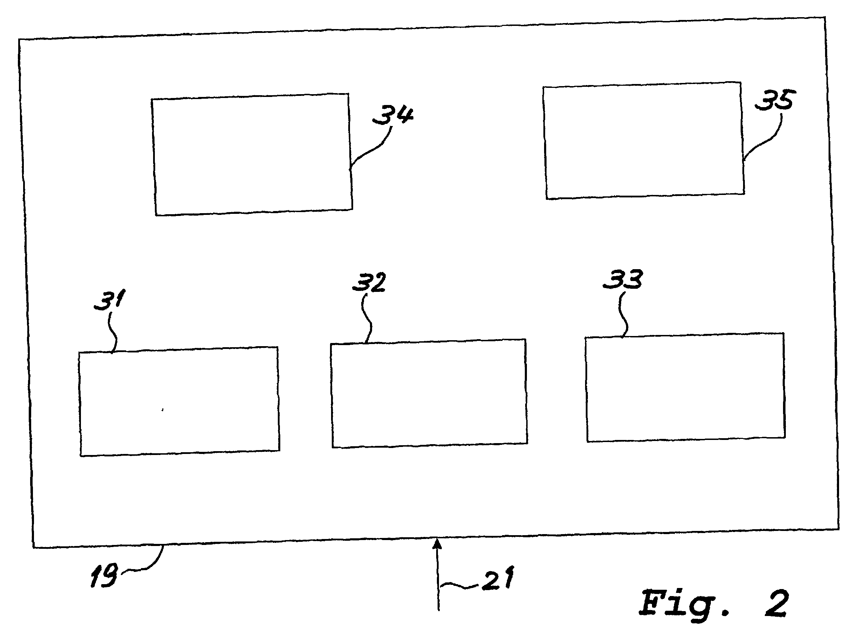

External signal connecting means 19 can have any of a great variety of configurations. Fig. 2 shows one of the many possible configurations of means 19. According to Fig. 2, the external signal connecting means 19 comprise e.g. a digital input circuit 31, an analog input circuit 32 (e.g. an analog amplifier), an offset correction circuit 33, an analog/digital conversion circuit 34 and a multiplexer 35. For simplicity, the various connections between these components of the external signal connecting means 19 are not shown in Fig. 2.

From the foregoing description it is apparent that the inclusion of external signal connecting means 19 in a system according to the invention substantially enhances the capabilities of such a system.

In a preferred embodiment of an angle transducer system according to the invention first electronic arithmetic unit 15 is connected with said amplifier means 13 and with signal correcting means, and first electronic arithmetic unit 15 is adapted to provide to amplifier means 13 and to signal correcting means 14 suitable coefficient values for their proper operation.

A preferred embodiment of an angle transducer system according to the invention further comprises power supply means 23 which are adapted for providing electrical power to at least the following components of the angle transducer system: angle sensing means 11, amplifier means 13 and first electronic arithmetic unit 15. In a preferred embodiment power supply means 23 provide different suitable power supply DC voltages to each of these means, e.g. 5, 12 or 36 V. As can be appreciated from the preferred embodiment shown by Fig. 1, power supply 23 can be configured to provide electrical power to all functional blocks of the angle transducer system.

In a preferred embodiment, first electronic arithmetic unit 15 is connected said power supply means 23, and first electronic arithmetic unit 15 is adapted to provide to power supply means 23 control signals enabling power supply means 23 to provide an optimum voltage supply to angle sensing means 11.

The reduced size of Hall effect type angle sensing device 26 and of all other above mentioned circuits associated thereto makes it possible to build an angle transducer system according to the invention in a very compact form. Such a system is therefore substantially smaller than prior art systems for a similar purpose.

An angle transducer system according to the invention is apt to be used without a housing and integrated on a rotatable axle.

An angle transducer system according to the invention has the aptitude to be calibrated on-line, i.e.

to set an operating point corresponding to angle equal to zero. The necessary signal transmission for this purpose is effected via external signal connecting means 19 and universal interface hardware 18. The calibration process itself is substantially carried out by means of the second electronic arithmetic unit 17.

An angle transducer system according to the invention has further the aptitude to operate in a master/slave relationship with other angle transducer systems, and the aptitude to be linked to a network (e.g. by means of a bus).

In a preferred embodiment, an angle transducer system according to the invention is so configured that it has the aptitude to carry out a self-diagnosis test and to provide as a result a status signal for the system.

The above described features of embodiments of angle transducer system according to the invention make it suitable to be used as accelerometer or as inclination meter.

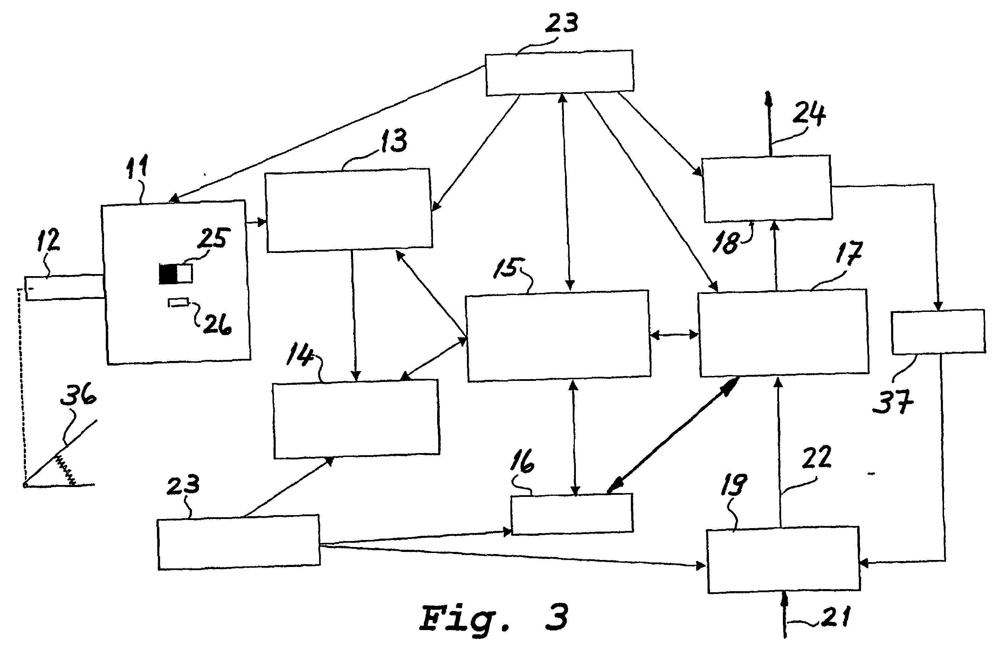

Fig. 3 illustrates use of an angle transducer system according to the invention of the type described above with reference to Figures 1 and 2 for controlling the operation of a motor 37. In the embodiment shown by Fig. 3, the rotatable axle 12 is the axle of an accelerator pedal 36 or an axle mechanically connected to the axle of the latter pedal. In the example shown by Fig. 3 an output signal provided by universal interface hardware 18 is fed as input signal to motor 37 and an output signal provided by motor 37 is fed as input signal to external signal connecting means 19. From this example it can be appreciated that an angle transducer system according to the invention makes possible to build a feedback loop.

List of reference numbers

**[0039]**

| | |
|---|---|
| 11 | angle sensing means |
| 12 | rotatable axle of angle sensing means |
| 13 | electronic amplifier means |
| 14 | signal correcting, digital electronic circuit means |
| 15 | first electronic arithmetic unit |
| 16 | electronic memory means |
| 17 | second electronic arithmetic unit |
| 18 | universal interface hardware |
| 19 | external signal connecting means |
| 21 | input lead |
| 22 | output lead |
| 23 | power supply means |
| 24 | output lead |
| 25 | magnet |
| 26 | Hall sensor |
| 31 | digital input circuit |
| 32 | analog input circuit |
| 33 | offset correction circuit |
| 34 | analog/digital conversion circuit |
| 35 | multiplexer |
| 36 | accelerator pedal |
| 37 | motor |

Although preferred embodiments of the invention have been described using specific terms, such description is for illustrative purposes only, and it is to be understood that changes and variations may be made without departing from the spirit or scope of the following claims.

**Claims**

1. An angle transducer system comprising:

(a) angle sensing means (11) for providing two electrical angle signals which are in quadrature, which are directly related to a rotation angle of a rotatable axle (12), and which together carry information representative of the size and sense of said rotation angle, the size of said angle having a value in a range comprising at least angle values going from 0 to 360 degrees;
(b) electronic amplifier means (13) for amplifying said angle signals provided by said angle sensing means (11) and for providing two corresponding amplified angle signals,
(c) signal correcting electronic circuit means (14) for modifying each of said two amplified angle signals with a predetermined correcting value and for providing two corresponding corrected amplified angle signals;
(d) a first electronic arithmetic unit (15) for processing said corrected amplified angle signals in order to provide a first digital signal (x) which accurately represents the size of said rotation angle of said rotation axle (12), and the sense of rotation of said rotation axle (12);
(e) electronic memory means (16) for storing at least data to be delivered to said first electronic arithmetic unit (15); and
(f) a second electronic arithmetic unit (17) for processing said first digital signal provided by said first electronic arithmetic unit (15) for providing a second digital signal which represents a value (y) taken by a freely defined predetermined function f(x) for a value (x) of said first digital signal.

2. An angle transducer system according to claim 1, wherein said angle sensing means (11) include said rotatable axle (12).

3. An angle transducer system according to claim 1, wherein said signal correcting circuit means (14) are adapted for multiplying each of said two amplified angle signals with a predetermined correcting factor.

**4.** An angle transducer system according'to claim 1, wherein said electronic memory means (16) are adapted for storing also data provided by said first electronic arithmetic unit (15).

**5.** An angle transducer system according to claim 1 further comprising an interface hardware (18) connected with said second electronic arithmetic unit (17) and being adapted

for receiving from said second electronic arithmetic unit (17) at least one data signal corresponding to said second digital signal, and

for providing an output signal corresponding to said second digital signal.

**6.** An angle transducer system according to claim 1 further comprising external signal connecting means (19) having at least one input lead and at least one output lead, the latter lead being connected with at least one input lead of said second electronic arithmetic unit (17), said external signal connecting means (19) being adapted

for receiving at least one external signal via their at least one input lead (21), and

for transmitting to said second electronic arithmetic unit (17) via their at least one output lead (22) a signal corresponding to said at least one external signal.

**7.** An angle transducer system according to claim 5 further comprising

external signal connecting means (19) having at least one input lead and at least one output lead, the latter lead being connected with at least one input lead of said second electronic arithmetic unit (17), said external signal connecting means (19) being adapted

for receiving at least one external signal via their at least one input lead, and

for transmitting to said second electronic arithmetic unit (17) via their at least one output lead a signal corresponding to said at least one external signal;

wherein

said external signal connecting means (19), said second electronic arithmetic unit (17) and said interface hardware (18) are adapted to transmit said at least one external signal directly to an output lead of said interface hardware (18).

**8.** An angle transducer system according to claim 1, wherein said first electronic arithmetic unit (15) is connected with said amplifier means (13) and said signal correcting means, and wherein said first electronic arithmetic unit (15) is adapted to provide to said amplifier means (13) and to said signal correcting means (14) suitable coefficient values for their proper operation.

**9.** An angle transducer system according to claim 1 further comprising power supply means (23) adapted for providing electrical power to at least the following components of the angle transducer system: said angle sensing means (11), said amplifier means (13) and said first electronic arithmetic unit (15).

**10.** An angle transducer system according to claim 1, wherein said first electronic arithmetic unit (15) is connected with said power supply means (23), and wherein said first electronic arithmetic unit (15) is adapted to provide to said power supply means (23) control signals enabling said power supply means to provide an optimum voltage supply to said angle sensing means (11).

**Patentansprüche**

**1.** Winkelgebersystem, mit:

(a) Mitteln (11) zur Erfassung des Winkels, welche zwei elektrische Winkelsignale liefern, die in Quadratur zueinander stehen, einen direkten Bezug zum Drehwinkel einer drehbaren Achse (12) aufweisen und zusammen die Information über die Grösse und die Richtung des Drehwinkels enthalten, wobei die Grösse des Winkels in einem winkelmässigen Wertebereich von mindestens 0 bis 360 Grad liegt;

(b) elektronischen Verstärkungsmitteln (13), welche die von den genannten Mitteln (11) zur Erfassung des Winkels gelieferten Winkelsignale verstärken und zwei entsprechende verstärkte Winkelsignale liefern;

(c) einer elektronischen Signalkorrektur-Schaltung (14), welche die beiden verstärkten Winkelsignale um einen vorgegebenen Korrekturwert verändert und zwei entsprechende korrigierte verstärkte Winkelsignale liefert;

(d) einer ersten elektronischen arithmetischen Einheit (15), welche die korrigierten verstärkten Winkelsignale verarbeitet, um ein erstes digitales Signal (x) zu erzeugen, welches die Grösse des Drehwinkels der Drehachse (12) und die Drehrichtung der Drehachse (12) genau wiedergibt;

(e) elektronischen Speichermitteln (16), welche zumindest der ersten elektronischen arithmetischen Einheit (15) zuzuführende Daten speichert; und

(f) einer zweiten elektronischen arithmetischen Einheit (17), welche das von der ersten elektronischen arithmetischen Einheit (15) gelieferte erste digitale Signal verarbeitet und ein zweites digitales Signal erzeugt, welches einen Wert (y) darstellt, der eine frei definierte, vorgegebene Funktion f(x) für einen Wert (x) des ersten digitalen Signals annimmt.

2. Winkelgebersystem nach Anspruch 1, **dadurch gekennzeichnet, dass** die Mittel (11) zur Erfassung des Winkels die drehbare Achse (12) einschliessen.

3. Winkelgebersystem nach Anspruch 1, **dadurch gekennzeichnet, dass** die Signalkorrektur-Schaltung (14) dazu geeignet ist, die beiden verstärkten Winkelsignale mit einem vorgegebenen Korrekturfaktor zu multiplizieren.

4. Winkelgebersystem nach Anspruch 1, **dadurch gekennzeichnet, dass** die elektronischen Speichermittel (16) dazu geeignet sind, auch von der ersten elektronischen arithmetischen Einheit (15) gelieferte Daten zu speichern.

5. Winkelgebersystem nach Anspruch 1, weiterhin eine Hardware-Schnittstelle (18) enthaltend, welche an der zweiten elektronischen arithmetischen Einheit (17) angeschlossen ist und dazu geeignet ist,

   von der zweiten elektronischen arithmetischen Einheit (17) mindestens ein Datensignal zu empfangen, welches dem zweiten digitalen Signal entspricht, und

   ein diesem zweiten digitalen Signal entsprechendes Ausgangssignal auszugeben.

6. Winkelgebersystem nach Anspruch 1, weiterhin einen externen Signalanschluss (19) enthaltend, der mindestens eine Eingangsleitung und mindestens eine Ausgangsleitung aufweist, welche letztere Leitung mit mindestens einer Eingangsleitung der zweiten elektronischen arithmetischen Einheit (17) verbunden ist, wobei der externe Signalanschluss (19) dazu geeignet ist,

   über seine mindestens eine Eingangsleitung (21) mindestens ein externes Signal zu empfangen, und

   über seine mindestens eine Ausgangsleitung (22) ein dem mindestens einen externen Signal entsprechendes Signal an die zweite elektronische arithmetische Einheit (17) zu übertragen.

7. Winkelgebersystem nach Anspruch 5, weiterhin einen externen Signalanschluss (19) enthaltend, der mindestens eine Eingangsleitung und mindestens eine Ausgangsleitung aufweist, welche letztere Leitung mit mindestens einer Eingangsleitung der zweiten elektronischen arithmetischen Einheit (17) verbunden ist, wobei der externe Signalanschluss (19) dazu geeignet ist,

   über seine mindestens eine Eingangsleitung (21) mindestens ein externes Signal zu empfangen, und

   über seine mindestens eine Ausgangsleitung (22) ein dem mindestens einen externen Signal entsprechendes Signal an die zweite elektronische arithmetische Einheit (17) zu übertragen,

   **dadurch gekennzeichnet, dass**

   der externe Signalanschluss (19), die zweite elektronische arithmetische Einheit (17) und die Hardware-Schnittstelle (18) dazu geeignet sind, das mindestens eine externe Signal direkt an eine Ausgangsleitung der Hardware-Schnittstelle (18) zu übertragen.

8. Winkelgebersystem nach Anspruch 1, **dadurch gekennzeichnet, dass** die erste elektronische arithmetische Einheit (15) an die Verstärkungsmittel (13) und an der Signalkorrekturschaltung angeschlossen ist, und dass die erste elektronische arithmetische Einheit (15) dazu geeignet ist, den Verstärkungsmitteln (13) und der Signalkorrekturschaltung (14) geeignete Koeffizientenwerte für deren richtiges Funktionieren zu liefern.

9. Winkelgebersystem nach Anspruch 1, weiterhin eine Stromversorgung (23) enthaltend, welche dazu geeignet ist, mindestens folgende Komponenten des Winkelgebersystems mit elektrischem Strom zu versorgen: die Mittel (11) zur Erfassung des Winkels (11), die Verstärkungsmittel (13) und die erste elektronische arithmetische Einheit (15).

10. Winkelgebersystem nach Anspruch 1, **dadurch gekennzeichnet, dass** die erste elektronische arithmetische Einheit (15) an der Stromversorgung (23) angeschlossen ist, und dass die erste elektronische arithmetische Einheit (15) dazu geeignet ist, der Stromversorgung (23) Steuersignale zu liefern, welche eine optimale Spannungsversorgung der Mittel (11) zur Erfassung des Winkels durch die Stromversorgung gestatten.

## Revendications

1. Système capteur angulaire, comprenant:

   (a) des moyens de détection angulaire (11) fournissant deux signaux d'angle électriques qui sont en quadrature, sont en relation directe avec un angle de rotation d'un axe rotatif (12), et qui comportent conjointement l'information représentant la grandeur et le sens dudit angle de rotation, la grandeur dudit angle ayant une valeur comprise dans un domaine de valeurs angulaires s'étendant de 0 à 360 degrés au moins;

   (b) des moyens électroniques d'amplification (13), aux fins d'amplifier lesdits signaux d'angle fournis par lesdits moyens de détection angulaire (11) et de fournir deux signaux d'angle amplifiés correspondants;

(c) un circuit électronique de correction (14) des signaux aux fins de modifier chacun desdits deux signaux d'angle amplifiés avec une valeur de correction prédéterminée et de fournir deux signaux amplifiés et corrigés correspondants;

(d) une première unité arithmétique (15) électronique aux fins de traiter lesdits signaux d'angle amplifiés et corrigés pour obtenir un premier signal (x) numérique qui représente précisément la grandeur dudit angle de rotation dudit axe de rotation (12) et le sens de rotation dudit axe de rotation (12);

(e) des moyens de mémoire (16) électroniques aux fins de mettre en mémoire au moins des données destinées à ladite première unité arithmétique électronique (15); et

(f) une deuxième unité arithmétique (17) électronique aux fins de traiter ledit premier signal numérique fourni par ladite première unité arithmétique (15) électronique pour obtenir un deuxième signal numérique représentant une valeur (y) prise par une fonction f(x) prédéterminée et librement définie pour une valeur (x) dudit premier signal numérique.

2. Système capteur angulaire selon la revendication 1, **caractérisé en ce que** ledit axe rotatif fait partie desdits moyens de détection angulaire (11).

3. Système capteur angulaire selon la revendication 1, **caractérisé en ce que** ledit circuit de correction (14) des signaux est adapté à multiplier chacun desdits signaux d'angle amplifiés par un facteur de correction prédéterminé.

4. Système capteur angulaire selon la revendication 1, **caractérisé en ce que** lesdits moyens de mémoire (16) électroniques sont adaptés à mettre en mémoire également des données fournies par ladite première unité arithmétique (15) électronique.

5. Système capteur angulaire selon la revendication 1, comprenant en outre une interface matérielle (18) connectée à ladite deuxième unité arithmétique (17) électronique et adapté à

recevoir de ladite deuxième unité arithmétique (17) électronique au moins un signal de données correspondant audit deuxième signal numérique, et à

fournir un signal de sortie correspondant audit deuxième signal numérique.

6. Système capteur angulaire selon la revendication 1, comprenant en outre un raccordement (19) pour signaux externes muni d'au moins un conducteur d'entrée et d'au moins un conducteur de sortie, ce dernier conducteur étant connecté à au moins un conducteur d'entrée de ladite deuxième unité arithmétique (17) électronique, ledit raccordement (19) pour signaux externes étant adapté à

recevoir au moins un signal externe par l'intermédiaire d'au moins un conducteur d'entrée dudit raccordement, et à

transmettre, par l'intermédiaire d'au moins un conducteur de sortie (22) dudit raccordement, à ladite deuxième unité arithmétique (17) électronique un signal correspondant à au moins un signal externe.

7. Système capteur angulaire selon la revendication 5, comprenant en outre un raccordement (19) pour signaux externes muni d'au moins un conducteur d'entrée et d'au moins un conducteur de sortie, ce dernier conducteur étant connecté à au moins un conducteur d'entrée de ladite deuxième unité arithmétique (17) électronique, ledit raccordement (19) pour signaux externes étant adapté à

recevoir au moins un signal externe par l'intermédiaire d'au moins un conducteur d'entrée dudit raccordement, et à

transmettre, par l'intermédiaire d'au moins un conducteur de sortie (22) dudit raccordement, à ladite deuxième unité arithmétique (17) électronique un signal correspondant à au moins un signal externe;

**caractérisé en ce que**

ledit raccordement (19) pour signaux externes, ladite deuxième unité arithmétique (17) électronique et ladite interface matérielle (18) sont adaptés à transmettre ledit au moins un signal externe directement à un conducteur de sortie de ladite interface matérielle (18).

8. Système capteur angulaire selon la revendication 1, **caractérisé en ce que** ladite première unité arithmétique (15) électronique est connectée auxdits moyens d'amplification (13) et auxdits moyens de correction des signaux, et que ladite première unité arithmétique (15) électronique est adaptée à fournir auxdits moyens d'amplification (13) et auxdits moyens de correction (14) des signaux, des coefficients appropriés assurant leur fonctionnement correct.

9. Système capteur angulaire selon la revendication 1, comprenant en outre une alimentation (23) adaptée à fournir de l'énergie électrique au moins aux composants suivants du système capteur angulaire: auxdits moyens de détection angulaire (11), auxdits moyens d'amplification (13) et à ladite première unité arithmétique (15) électronique.

10. Système capteur angulaire selon la revendication 1, **caractérisé en ce que** ladite première unité arithmétique (15) électronique est connectée à ladite alimentation (23), et que ladite première unité arithmétique (15) électronique est adaptée à fournir à ladite alimentation (23) des signaux de commande permettant à ladite alimentation de fournir une tension d'alimentation optimale auxdits moyens de détection angulaire (11).

Fig. 1

EP 1 114 982 B1

Fig. 2

EP 1 114 982 B1

Fig. 3

EP 1 114 982 B1